# EUROPÄISCHE PATENTSCHRIFT

(11) **EP 3 222 959 B1**
(45) Veröffentlichungstag und Bekanntmachung des Hinweises auf die Patenterteilung: **09.12.2020**
(21) Anmeldenummer: 17161979.4
(22) Anmeldetag: 21.03.2017
(51) Int. Cl.: F41H 7/04, B62D 9/00, B62D 12/00, F41A 23/34, F41H 7/02

(54) **GESCHÜTZTES RADFAHRZEUG**
PROTECTED WHEELED VEHICLE
VÉHICULE BLINDÉ À ROUES

(30) Priorität: 22.03.2016 DE 102016105278
(43) Veröffentlichungstag der Anmeldung: 27.09.2017
(73) Patentinhaber: Jourdan, Klaus, 63571 Gelnhausen (DE)
(72) Erfinder: Jourdan, Klaus, 63571 Gelnhausen (DE)
(74) Vertreter: Wolf, Michael

(56) Entgegenhaltungen:
- WO-A1-98/25099
- DE-A1- 1 580 295
- DE-A1- 2 430 913
- DE-A1- 2 541 854
- DE-A1- 3 426 205
- DE-A1- 10 113 340
- DE-U1- 7 807 450
- US-A- 4 042 053

## Beschreibung

Die Erfindung betrifft ein geschütztes Radfahrzeug.

Ein geschütztes Radfahrzeug der eingangs genannten Art ist aus dem Dokument DE 24 30 913 A1 bekannt. Dieses geschützte Radfahrzeug umfasst zwei ineinandergreifende Fahrzeugabschnitte, wobei an jedem Fahrzeugabschnitt eine Fahrzeugachse mit jeweils zwei Rädern an beiden Enden der Fahrzeugachse angeordnet ist, wobei die Fahrzeugabschnitte miteinander über ein Gelenk verbunden ausgebildet sind, das als Zentralraum insbesondere für einen Fahrer dient und vorzugsweise von diesem aus in seinem Gelenkwinkel einstellbar ausgebildet ist.

Der Erfindung liegt die Aufgabe zugrunde, ein geschütztes Radfahrzeug der eingangs genannten Art zu verbessern. Insbesondere sollen Mittel geschaffen werden, welche die Steuerung der Bewegung eines solchen Fahrzeugs erleichtern und erweitern.

Diese Aufgabe ist mit einem geschützten Radfahrzeug der eingangs genannten Art durch die im Patentanspruch 1 aufgeführten Merkmale gelöst.

Mit anderen Worten ist erfindungsgemäß vorgesehen, dass das geschützte Radfahrzeug sowohl durch Betätigung des Gelenks zwischen den zwei ineinandergreifenden Fahrzeugteilen, als auch durch Steuerung der Gelenke in den Radachsen des Fahrzeuges gelenkt werden kann und dass diese beiden Methoden der Lenkung beliebig miteinander kombiniert werden können. Besonders bevorzugt ist vorgesehen, dass ein oder mehrere Räder einer Fahrzeugseite in ihrer auf die Geschwindigkeit des Radfahrzeugs zurückgehenden Drehung mindestens abbremsbar ausgebildet sind. Diese Maßgabe verbessert dabei nicht nur weiter die Wendigkeit des Radfahrzeugs, sondern kann auch bei der Waffenausrichtung genutzt werden.

Bezüglich der Maßgabe gemäß Patentanspruch 11, nämlich, dass die Räder einer der beiden Fahrzeugachsen vom Zentralraum aus lenkbar ausgebildet sind, ist ferner gemäß einer konkreteren Ausführungsform besonders bevorzugt vorgesehen, dass am bei Vorwärtsfahrt vorausfahrenden Fahrzeugabschnitt mehrere Fahrzeugachsen mit jeweils zwei Rädern vorgesehen und mindestens zwei dieser Räder vorzugsweise vom Zentralraum aus lenkbar ausgebildet sind.

Andere vorteilhafte Weiterbildungen des erfindungsgemäßen geschützten Radfahrzeuges ergeben sich aus den abhängigen Patentansprüchen.

Der Vollständigkeit halber wird noch auf das weiter abliegende Dokument DE 101 13 340 A1 hingewiesen. Aus diesem ist ein Radbagger mit einem Gelenk zwischen zwei Fahrzeugabschnitten und mit jeweils einer lenkbaren Fahrzeugachse pro Fahrzeugabschnitt bekannt, bei dem aber das Gelenk keinen geschützten Zentralraum bildet.

Außerdem wird noch auf das Dokument DE 25 41 854 A1 hingewiesen. Das dort gezeigte Radfahrzeug unterscheidet sich von der erfindungsgemäßen Lösung aber unter anderem insbesondere dadurch, dass die Räder selbst nicht lenkbar ausgebildet sind. Schließlich wird noch auf das Dokument DE 15 80 295 A1 hingewiesen. Das dort gezeigte Radfahrzeug unterscheidet sich von der erfindungsgemäßen Lösung aber unter anderem insbesondere dadurch, dass kein als Zentralraum dienendes Gelenk vorgesehen ist.

Das geschützte Radfahrzeug einschließlich seiner vorteilhaften Weiterbildungen gemäß der abhängigen Patentansprüche wird nachfolgend anhand der zeichnerischen Darstellung eines bevorzugten Ausführungsbeispiels genauer erläutert.

Es zeigt schematisch
- Figur 1: einen Horizontalschnitt durch das erfindungsgemäße geschützte Radfahrzeug mit insgesamt acht Rädern entlang der Linie B-B in Figur 2;
- Figur 2: einen Vertikalschnitt durch das geschützte Radfahrzeug entlang der Linie A-A in Figur 1; und
- Figur 3: eine Vorderansicht des geschützten Radfahrzeugs gemäß Figur 1 und 2.

Das in den Figuren dargestellte geschützte Radfahrzeug besteht stets aus zwei ineinandergreifenden Fahrzeugabschnitten 1, 2, wobei an jedem Fahrzeugabschnitt 1, 2 eine Fahrzeugachse 3 mit jeweils zwei Rädern 4 an beiden Enden der Fahrzeugachse 3 angeordnet ist.

Die Maßgabe "eine Fahrzeugachse 3" hat dabei (wie auch im Patentanspruch 1 angegeben) stets die Bedeutung von "mindestens eine Fahrzeugachse 3", wobei konkret bei dem besonders bevorzugten und in den Figuren dargestellten Ausführungsbeispiel am bei Vorwärtsfahrt vorausfahrenden Fahrzeugabschnitt 1 insgesamt drei Fahrzeugachsen 3 mit jeweils zwei Rädern 4 und am bei Vorwärtsfahrt nachfolgenden Fahrzeugabschnitt 2 eine Fahrzeugachse 3 mit zwei Rädern 4 vorgesehen sind. Ebenfalls möglich sind aber auch Ausführungsformen mit jeweils zwei Fahrzeugachsen 3 pro Fahrzeugabschnitt 1, 2 oder dergleichen.

Weiterhin ist grundsätzlich bei allen Ausführungsformen des erfindungsgemäßen Radfahrzeugs vorgesehen, dass die Fahrzeugabschnitte 1, 2 miteinander über ein Gelenk 5 verbunden ausgebildet sind, das als (natürlich geschützter) Zentralraum 6 vorzugsweise für einen Fahrer (und möglicherweise weitere Mitfahrer) dient und vorzugsweise von diesem aus in seinem Gelenkwinkel einstellbar ausgebildet ist. Zur Wahrung einer guten Fahrstabilität ist in diesem Kontext weiterhin bevorzugt vorgesehen, dass das Gelenk 5 nur bis zu einer vorbestimmten Geschwindigkeit des Radfahrzeugs verschwenkbar ausgebildet ist. Sind die Fahrzeugabschnitte 1, 2 nicht in Flucht und nähert sich das geschützte Radfahrzeug der genannten vorbestimmten Geschwindigkeit, so ist vorzugsweise eine auf das Gelenk 5 einwirkende Regelungseinrichtung vorgesehen, die bewirkt, dass die Fahrzeugabschnitte 1, 2 in Flucht kommen.

Weiterhin ist vorgesehen, dass die Räder 4 einer der beiden (oder mehreren) Fahrzeugachsen 3 vorzugsweise vom Zentralraum 6 aus lenkbar ausgebildet sind.

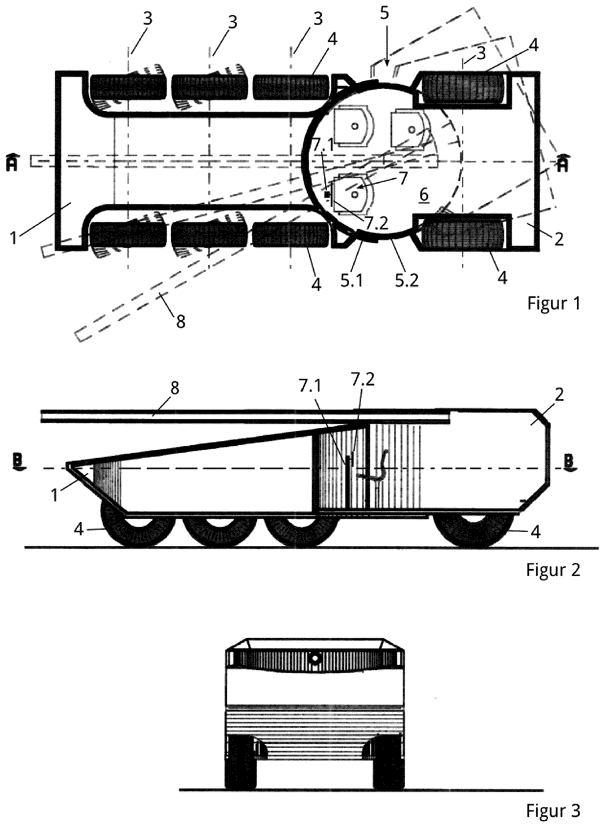

Bezogen auf die Ausführungsform gemäß den Figuren ist dabei vorgesehen, dass mindestens zwei der Räder 4 an dem bei Vorwärtsfahrt vorausfahrenden Fahrzeugabschnitt 1 lenkbar ausgebildet sind, besonders bevorzugt, die Räder 4 der beiden ersten, weiter vom Gelenk 5 entfernten Fahrzeugachsen 3: Vergleiche hierzu auch insbesondere Figur 1, in der eine mögliche Einlenkbewegung der genannten Räder 4 sowie des Gelenks 5 per Strichlinie angedeutet sind. Die übrigen Räder 4 am ersten Fahrzeugabschnitt 1 und die Räder 4 am bei Vorwärtsfahrt nachfolgenden Fahrzeugabschnitt 2 sind bei dieser Ausführungsform, wie ersichtlich, nicht lenkbar.

Es ist somit vorgesehen, dass am bei Vorwärtsfahrt vorausfahrenden Fahrzeugabschnitt 1 mehrere Fahrzeugachsen 3 mit jeweils zwei Rädern 4 vorgesehen und mindestens zwei dieser Räder 4 vorzugsweise vom Zentralraum 6 aus lenkbar ausgebildet sind.

Weiterhin ist in an sich bekannter Weise vorgesehen, dass in einem der beiden Fahrzeugabschnitte 1, 2, vorzugsweise im bei Vorwärtsfahrt vorausfahrenden Fahrzeugabschnitt 1, ein Antriebsmotor zum Antrieb mindestens einer der, vorzugsweise mehrerer oder aller, Fahrzeugachsen 3 angeordnet ist.

Darüber hinaus ist vorgesehen, dass der bei Vorwärtsfahrt nachfolgende Fahrzeugabschnitt 2, mit einer Waffe 8, vorzugsweise einem Geschützrohr, versehen ist. Wie insbesondere aus Figur 2 und 3 ersichtlich, ist dabei die Waffe 8 kasemattenartig (also ohne drehbaren Turm bzw. turmfrei) am nachfolgenden Fahrzeugabschnitt 2 angeordnet.

Dabei ist die Waffe 8 weiterhin besonders bevorzugt auch unabhängig von der Fahrzeuglängsachse des Fahrzeugabschnitts, an dem sie befestigt ist, beweg- bzw. richtbar ausgebildet (Semi-Kasematt).

Ferner ist an einem der beiden Fahrzeugabschnitte 1, 2, vorzugsweise wiederum an dem bei Vorwärtsfahrt nachfolgenden Fahrzeugabschnitt 2, eine (nicht extra dargestellte) Ein- und Ausstiegsluke am Heck des Fahrzeugs, insbesondere für den Fahrer, vorgesehen.

Ähnlich wie bei beim eingangs genannten Stand der Technik (DE 24 30 913 A1) sind weiterhin zur Ausbildung des Gelenks 5 zwei teilzylindrische, ineinander greifende Wandelemente 5.1, 5.2 vorgesehen, von denen jeweils eines an einem Ende eines Fahrzeugabschnitts 1, 2 angeordnet ist.

Ein weiteres, sehr bevorzugtes Merkmal der erfindungsgemäßen Lösung besteht ferner darin, dass im Zentralraum 6 eine sowohl mit den lenkbaren Rädern 4 als auch mit dem Gelenk 5 wirkverbundene Lenkeinrichtung 7, auch Lenk- und Richtkonsole genannt, angeordnet ist.

Wie schematisch aus den Figuren zu erkennen, ist dabei weiterhin bevorzugt vorgesehen, dass die genannte Lenkeinrichtung 7 aus einem (zum Beispiel über ein Kardan-Gelenk) schwenkbar zum Zentralraum 6 gelagerten Hebel 7.1 und einem drehbar daran gelagerten Lenkrad 7.2 gebildet ist, wobei vorzugsweise der Hebel 7.1 mit dem Gelenk 5 und das Lenkrad 7.2 mit den lenkbaren Rädern 4 wirkverbunden ist. Das genannte Lenkrad 7.2 muss dabei nicht zwingend rund, sondern kann zum Beispiel auch wie eine Lenkstange oder dergleichen ausgebildet sein. Insbesondere ist die Lenkeinrichtung 7 bevorzugt so ausgebildet, dass jegliche Lenkung des Fahrzeugs von einer Person vorgenommen werden kann.

Bezüglich des Hebels 7.1 ist bevorzugt vorgesehen, dass dieser um zwei, vorzugsweise senkrecht zueinander stehende Schwenkachsen schwenkbar gelagert ist, wobei diese vorzugsweise bei in normaler Ruheposition befindlichem Radfahrzeug beide jedenfalls in etwa horizontal verlaufend angeordnet sind.

Auf dieser Basis ergibt sich eine besonders einfache Handhabung des geschützten Radfahrzeugs dann, wenn einerseits eine Verschwenkung des Hebels 7.1 um die eine der beiden Schwenkachsen, vorzugsweise um die parallel zur Hauptlängsachse des Radfahrzeugs orientierte Schwenkachse, mit einer Bewegung des Gelenks 5 verbunden ausgebildet ist. Andererseits ist in Ergänzung hierzu vorgesehen, dass eine Verschwenkung des Hebels 7.1 um die andere der beiden Schwenkachsen, vorzugsweise um die rechtwinklig zur Hauptlängsachse des Radfahrzeugs orientierte und horizontal verlaufende Schwenkachse, mit einer Höhenverstellung (Niveauregulierung) mindestens eines Fahrzeugabschnitts 1, 2 verbunden ausgebildet ist. Diese Höhenverstellung dient dabei insbesondere zur Ausrichtung der oben genannten Waffe 8, die bevorzugt und bereits erwähnt in horizontaler Richtung fest mit dem hinteren Fahrzeugabschnitt 2 verbunden ist. Zudem ist weiterhin bevorzugt vorgesehen, dass die Waffe 8 auch durch einen Feintrieb an der Waffe selbst, und damit unabhängig von einer Höhenverstellung der Fahrzeugabschnitte 1, 2, in ihrer Höhenausrichtung verstellt werden kann. Vorzugsweise ist in Ergänzung hierzu eine Einrichtung zur vertikalen Waffenstabilisierung vorgesehen, welche die Waffe 8 bei einmal erfasstem Ziel selbst bei fahrendem Fahrzeug automatisch auf das Ziel ausgerichtet hält.

Eine weitere Besonderheit der erfindungsgemäßen Lösung besteht darin, dass in einem ersten Lenkmodus zur Erreichung eines möglichst kleinen Kurvenradius die lenkbaren Räder 4 und das Gelenk 5 in eine entgegengesetzte Drehrichtung und in einem zweiten Lenkmodus zur Erreichung eines Hundeganges (siehe hierzu https://de.wikipedia.org/w/index.php?title=Lenkung&oldid=150831408, dort unter Lenkarten) in eine gleiche Drehrichtung verschwenkbar ausgebildet sind. Der Fahrer kann dabei zum Beispiel mit Hilfe eines Schalters oder dergleichen entscheiden, welcher Lenkmodus gerade aktiv sein soll. Dies ermöglicht es also dem Fahrer eine Bewegungsart zu wählen, welche die Zielerfassung für einen gegnerischen Richtschützen erschwert und damit den Effekt einer "dynamischen Tarnkappe" zu bewirken.

Eine weitere Möglichkeit, die Wendigkeit des geschützten Radfahrzeugs zu erhöhen, besteht ferner darin, dass ein oder mehrere Räder 4 einer (oder der anderen) Fahrzeugseite in ihrer auf die Geschwindigkeit des Radfahrzeugs zurückgehenden Drehung mindestens abbremsbar, gegebenenfalls sogar blockierbar, ausgebildet sind. Dieses auch "Torque Vectoring" genannte Verfahren entspricht dabei im Grunde der Lenkung von Kettenfahrzeugen, bei denen eine Richtungsänderung ebenfalls durch Abbremsen der einen oder anderen Kette bewirkt wird.

Zur Auslösung dieser Option ist dabei vorgesehen, dass das Lenkrad 7.2 in beide Drehrichtungen einen Drehanschlag aufweist, wobei bis zum Drehanschlag die lenkbaren Räder 4 und danach eine zum einseitigen Abbremsen der Räder 4 vorgesehene Bremseinrichtung betätigbar ausgebildet sind.

### Bezugszeichenliste

- 1: Fahrzeugabschnitt
- 2: Fahrzeugabschnitt
- 3: Fahrzeugachse
- 4: Rad
- 5: Gelenk
- 5.1: Wandelement
- 5.2: Wandelement
- 6: Zentralraum
- 7: Lenkeinrichtung
- 7.1: Hebel
- 7.2: Lenkrad
- 8: Waffe

## Patentansprüche

1. Geschütztes Radfahrzeug, umfassend zwei Fahrzeugabschnitte (1, 2), wobei an jedem Fahrzeugabschnitt (1, 2) mindestens eine Fahrzeugachse (3) mit jeweils zwei Rädern (4) und an beiden Enden der Fahrzeugachse (3) jeweils ein Rad (4) angeordnet ist, wobei die Fahrzeugabschnitte (1, 2) miteinander über ein Gelenk (5) verbunden ausgebildet sind, das als Zentralraum (6) für eine Fahrzeugbesatzung dient und in seinem Gelenkwinkel einstellbar ausgebildet ist, wobei am bei Vorwärtsfahrt vorausfahrenden Fahrzeugabschnitt (1) mehrere Fahrzeugachsen (3) mit jeweils zwei Rädern (4) vorgesehen und mindestens zwei dieser Räder (4) lenkbar ausgebildet sind, wobei am bei Vorwärtsfahrt nachfolgenden Fahrzeugabschnitt (2) eine Fahrzeugachse (3) mit jeweils zwei Rädern (4) vorgesehen ist und wobei der bei Vorwärtsfahrt nachfolgende Fahrzeugabschnitt (2) turmfrei mit einer Waffe versehen ist.

2. Geschütztes Radfahrzeug nach Anspruch 1,
**dadurch gekennzeichnet,**
**dass** im Zentralraum (6) eine sowohl mit den lenkbaren Rädern (4) als auch mit dem Gelenk (5) wirkverbundene Lenkeinrichtung (7) angeordnet ist.

3. Geschütztes Radfahrzeug nach Anspruch 2,
**dadurch gekennzeichnet,**
**dass** die Lenkeinrichtung (7) aus einem schwenkbar zum Zentralraum (6) gelagerten Hebel (7.1) und einem drehbar daran gelagerten Lenkrad (7.2) gebildet ist, wobei vorzugsweise der Hebel (7.1) mit dem Gelenk (5) und das Lenkrad (7.2) mit den lenkbaren Rädern (4) wirkverbunden ist.

4. Geschütztes Radfahrzeug nach Anspruch 3,
**dadurch gekennzeichnet,**
**dass** der Hebel (7.1) um zwei, vorzugsweise senkrecht zueinander stehende Schwenkachsen schwenkbar gelagert ist.

5. Geschütztes Radfahrzeug nach Anspruch 4,
**dadurch gekennzeichnet,**
**dass** eine Verschwenkung des Hebels (7.1) um die eine der beiden Schwenkachsen, vorzugsweise um die parallel zur Hauptlängsachse des Radfahrzeugs orientierte Schwenkachse, mit einer Bewegung des Gelenks (5) verbunden ausgebildet ist.

6. Geschütztes Radfahrzeug nach Anspruch 5,
**dadurch gekennzeichnet,**
**dass** eine Verschwenkung des Hebels (7.1) um die andere der beiden Schwenkachsen, vorzugsweise um die rechtwinklig zur Hauptlängsachse des Radfahrzeugs orientierte und horizontal verlaufende Schwenkachse, mit einer Höhenverstellung mindestens eines Fahrzeugabschnitts (1, 2) verbunden ausgebildet ist.

7. Geschütztes Radfahrzeug nach einem der Ansprüche 1 bis 6,
**dadurch gekennzeichnet,**
**dass** ein oder mehrere Räder (4) einer Fahrzeugseite in ihrer auf die Geschwindigkeit des Radfahrzeugs zurückgehenden Drehung mindestens abbremsbar ausgebildet sind.

8. Geschütztes Radfahrzeug nach Anspruch 3 und 7,
**dadurch gekennzeichnet,**
**dass** das Lenkrad (7.2) in beide Drehrichtungen einen Drehanschlag aufweist, wobei bis zum Drehanschlag die lenkbaren Räder (4) und danach eine zum einseitigen Abbremsen der Räder (4) vorgesehene Bremseinrichtung betätigbar ausgebildet sind.

9. Geschütztes Radfahrzeug nach einem der Ansprüche 1 bis 8,
**dadurch gekennzeichnet,**
**dass** in einem ersten Lenkmodus zur Erreichung eines möglichst kleinen Kurvenradius die lenkbaren Räder (4) und das Gelenk (5) in eine entgegengesetzte Drehrichtung und in einem zweiten Lenkmodus zur Erreichung eines Hundeganges in eine gleiche Drehrichtung verschwenkbar ausgebildet sind.

10. Geschütztes Radfahrzeug nach einem der Ansprüche 1 bis 9,
**dadurch gekennzeichnet,**
**dass** das Gelenk (5) nur bis zu einer vorbestimmten Geschwindigkeit des Radfahrzeugs verschwenkbar ausgebildet ist.

11. Geschütztes Radfahrzeug nach einem der Ansprüche 1 bis 10,
**dadurch gekennzeichnet,**
**dass** mindestens zwei der Räder (4) vom Zentralraum (6) aus lenkbar ausgebildet sind.

12. Geschütztes Radfahrzeug nach Anspruch 1,
**dadurch gekennzeichnet,**
**dass** das Gelenk (5) als Zentralraum (6) für einen Fahrer dient.

## Claims

1. A protected wheeled vehicle comprising two vehicle sections (1, 2), wherein at least one vehicle axle (3) having two wheels (4) each with one wheel (4) at each end of the vehicle axle (3) is arranged on each vehicle section (1, 2), wherein the vehicle sections (1, 2) are configured to be connected to one another via an articulation (5) which serves as central space (6) for a vehicle crew and is configured to be adjustable in its articulation angle, wherein several vehicle axles (3) each having two wheels (4) are provided on the preceding vehicle section (1) during forward travel and at least two of these wheels (4) are configured to be steerable, wherein the following vehicle section (2) during forward travel is provided with a vehicle axle (3) having two wheels (4) each and wherein the following vehicle section (2) during forward travel is configured to be turret-free and provided with a weapon (8).

2. The protected wheeled vehicle according to claim 1,
**characterized in that**
a steering device (7) operatively connected both to the steerable wheels (4) and also to the articulation (5) is arranged in the central space (6).

3. The protected wheeled vehicle according to claim 2,
**characterized in that**
the steering device (7) is formed from a lever (7.1) mounted pivotably with respect to the central space (6) and a steering wheel (7.2) mounted rotatably thereon, wherein preferably the lever (7.1) is operatively connected to the articulation (5) and the steering wheel (7.2) is operatively connected to the steerable wheels (4).

4. The protected wheeled vehicle according to claim 3,
**characterized in that**
the lever (7.1) is mounted pivotably about two pivot axes which are preferably perpendicular to one another.

5. The protected wheeled vehicle according to claim 4,
**characterized in that**
a pivoting of the lever (7.1) about the one of the two pivot axes, preferably about the pivot axis oriented parallel to the principal longitudinal axis of the wheeled vehicle is configured to be connected to a movement of the articulation (5).

6. The protected wheeled vehicle according to claim 5,
**characterized in that**
the pivoting of the lever (7.1) about the other one of the two pivot axes, preferably about the pivot axis oriented at right angles to the principal longitudinal axis of the wheeled vehicle and running horizontally is configured to be connected to a height adjustment of at least one vehicle section (1, 2).

7. The protected wheeled vehicle according to one of claims 1 to 6,
**characterized in that**
one or more wheels (4) of one vehicle side are configured to be at least breakable in its rotation attributed to the speed of the wheeled vehicle.

8. The protected wheeled vehicle according to claim 3 and 7,
**characterized in that**
the steering wheel (7.2) has a rotary stop in both directions of rotation, wherein the steerable wheels (4) up to the rotary stop and then a braking device provided for one-sided braking of the wheels (4) are configured to be actuatable.

9. The protected wheeled vehicle according to one of claims 1 to 8,
**characterized in that**
in a first steering mode the steerable wheels (4) and the articulation (5) are configured to be pivotable in an opposite direction of rotation to achieve the smallest possible curve radius and in a second steering mode are configured to be pivotable in a same direction of rotation in order to achieve a crab steering.

10. The protected wheeled vehicle according to one of claims 1 to 9,
**characterized in that**
the articulation (5) is only configured to be pivotable up to a predetermined speed of the wheeled vehicle.

11. The protected wheeled vehicle according to one of claims 1 to 10,
**characterized in that**
at least two of the wheels (4) are configured to be steerable from the central space (6).

12. The protected wheeled vehicle according to claim 1,
**characterized in that**
the articulation (5) serves as central space (6) for a driver.

## Revendications

1. Véhicule sur roues protégé, comprenant deux sections de véhicule (1, 2), sachant que sur chaque section de véhicule (1, 2) est disposé au moins un essieu de véhicule (3) avec respectivement deux roues (4) et aux deux extrémités de l'essieu de véhicule (3) respectivement une roue (4), sachant que les sections de véhicule (1, 2) sont constituées reliées entre elles par une articulation (5), qui sert de compartiment central (6) pour un équipage de véhicule et est constituée réglable dans son angle d'articulation, sachant que plusieurs essieux de véhicule (3) avec respectivement deux roues (4) sont prévus sur la section de véhicule (1) devançant en cas de marche avant et au moins deux de ces roues (4) sont constituées dirigeables, sachant que sur la section de véhicule (2) suivant en cas de marche avant, un essieu de véhicule (3) avec respectivement deux roues (4) est prévu et sachant que la section de véhicule (2) suivant en cas de marche avant est dotée d'une arme sans tourelle.

2. Véhicule sur roues protégé selon la revendication 1,
**caractérisé en ce que**
dans le compartiment central (6) est disposé un système de direction (7) en liaison fonctionnelle tant avec les roues orientables (4) qu'avec l'articulation (5).

3. Véhicule sur roues protégé selon la revendication 2,
**caractérisé en ce que**
le système de direction (7) est formé d'un levier (7.1) logé pouvant pivoter par rapport au compartiment central (6) et d'un volant (7.2) logé pouvant tourner dessus, sachant de préférence que le levier (7.1) est en liaison fonctionnelle avec l'articulation (5) et le volant (7.2) avec les roues orientables (4).

4. Véhicule sur roues protégé selon la revendication 3,
**caractérisé en ce que**
le levier (7.1) est logé pouvant pivoter autour de deux axes de pivotement étant de préférence perpendiculaires l'un à l'autre.

5. Véhicule sur roues protégé selon la revendication 4,
**caractérisé en ce qu'**
un pivotement du levier (7.1) autour de l'un des deux axes de pivotement, de préférence autour de l'axe de pivotement orienté parallèlement à l'axe longitudinal principal du véhicule sur roues, est constitué associé à un mouvement de l'articulation (5).

6. Véhicule sur roues protégé selon la revendication 5,
**caractérisé en ce qu'**
un pivotement du levier (7.1) autour de l'autre des deux axes de pivotement, de préférence autour de l'axe de pivotement orienté perpendiculairement à l'axe longitudinal principal du véhicule sur roues et passant horizontalement est constitué associé à un réglage en hauteur au moins d'une section du véhicule (1, 2).

7. Véhicule sur roues protégé selon l'une quelconque des revendications 1 à 6,
**caractérisé en ce que**
une ou plusieurs roues (4) d'un côté du véhicule sont constituées pouvant être au moins freinées dans leur rotation revenant à la vitesse du véhicule sur roues.

8. Véhicule sur roues protégé selon les revendications 3 et 7,
**caractérisé en ce que**
le volant (7.2) comporte une butée de rotation dans les deux directions de rotation, sachant que jusqu'à la butée de rotation, les roues orientables (4) et ensuite un système de freinage prévu pour le freinage unilatéral des roues (4) sont constituées pouvant être actionnés.

9. Véhicule sur roues protégé selon l'une quelconque des revendications 1 à 8,
**caractérisé en ce que**
dans un premier mode de direction pour obtenir un rayon en courbe le plus petit possible, les roues orientables (4) et l'articulation (5) sont constituées pouvant pivoter dans une direction de rotation opposée et dans un deuxième mode de direction pour obtenir une marche en crabe dans une même direction de rotation.

10. Véhicule sur roues protégé selon l'une quelconque des revendications 1 à 9,
**caractérisé en ce que**
l'articulation (5) est constituée ne pouvant pivoter que jusqu'à une vitesse prédéterminée du véhicule sur roues.

11. véhicule sur roues protégé selon l'une quelconque des revendications 1 à 10,
**caractérisé en ce qu'**
au moins deux roues (4) sont constituées orientables depuis le compartiment central (6).

12. Véhicule sur roues protégé selon la revendication 1,
**caractérisé en ce que**
l'articulation (5) sert de compartiment central (6) pour un conducteur.
